# EUROPEAN PATENT SPECIFICATION

(11) **EP 3 410 702 B1**
(45) Date of publication and mention of the grant of the patent: **21.04.2021**
(21) Application number: 17802396.6
(22) Date of filing: 09.03.2017
(51) Int. Cl.: H04N 7/18, B60R 1/00, G03B 7/28, G03B 15/00, H04N 5/225, H04N 5/232, H04N 5/235, G06K 9/00, H04N 5/243, H04N 5/262

(54) **IMAGING DEVICE, IMAGING/DISPLAY METHOD AND IMAGING/DISPLAY PROGRAM**
BILDGEBUNGSVORRICHTUNG, BILDGEBUNGS-/ANZEIGEVERFAHREN UND BILDGEBUNGS-/ANZEIGEPROGRAMM
DISPOSITIF IMAGEUR, PROCÉDÉ D'IMAGERIE/AFFICHAGE ET PROGRAMME D'IMAGERIE/AFFICHAGE

(30) Priority: 24.05.2016 JP 2016103392; 31.01.2017 JP 2017015157
(43) Date of publication of application: 05.12.2018
(73) Proprietor: JVCKENWOOD Corporation, Yokohama-shi, Kanagawa 2210022 (JP)
(72) Inventor: YAMADA, Yasuo, Yokohama-shi Kanagawa 221-0022 (JP); MURATA, Toshitaka, Yokohama-shi Kanagawa 221-0022 (JP); HAYASHI, Keita, Yokohama-shi Kanagawa 221-0022 (JP)
(74) Representative: Glawe, Delfs, Moll
(86) International application number: PCT/JP2017/009362
(87) International publication number: WO 2017/203794

(56) References cited:
- JP-A- 2007 274 377
- JP-A- 2008 230 464
- JP-A- 2012 253 458
- JP-A- 2012 253 458
- US-A1- 2015 302 259

## Description

### Technical Field

The present disclosure relates to an image-pickup apparatus, an image-pickup display method, and an image-pickup display program.

### Background Art

In a camera installed in a vehicle so as to capture scenes in a traveling direction, for example, a technique for obtaining images having an appropriate brightness by automatic exposure control (AE: Automatic Exposure) has been known. Patent Literature 1 discloses a technique for performing exposure control using the luminance of each of a plurality of predetermined areas for exposure control. Patent Literature 2 discloses a technique for changing an area to be used for an exposure operation in accordance with the traveling speed of a vehicle. Patent Literature 3 discloses an image-pickup apparatus according to the preamble of claim 1. Patent Literature 4 discloses a vehicle comprising a camera to capture images of the rear side of the vehicle, the images being displayed in real time to the driver.

### Citation List

### Patent Literature

[Patent Literature 1] Japanese Unexamined Patent Application Publication No. 2010-041668
[Patent Literature 2] Japanese Unexamined Patent Application Publication No. 2014-143547
[Patent Literature 3] JP 2012 253458 A
[Patent Literature 4] US 2015/302259 A1

### Summary of Invention

### Technical Problem

The object or the area whose surroundings it is highly necessary to check during traveling of the vehicle varies depending on the operation state of the vehicle. However, when the brightness or the color of the entire angle of view or a predetermined partial area of the image is adjusted, the brightness or the color of the image may not become appropriate when the driver checks the object or the area whose surroundings it is highly necessary to check.

This embodiment has been made in order to solve the aforementioned problem and aims to provide a technique of appropriately adjusting the brightness and the color of the object and the area that it is highly necessary for the driver to check and presenting the image after the adjustment to the driver.

An image-pickup apparatus according to a first aspect of this embodiment is defined in claim 1.

An image-pickup display method according to a second aspect of this embodiment is defined in claim 11.

An image-pickup display program according to a third aspect of this embodiment is defined in claim 12.

According to this embodiment, when the driver changes course, a partial area in the course change direction is adjusted in such a way that this area has an appropriate brightness and an appropriate color, whereby it is possible to present images that enable the driver to appropriately check the state of the lane after the course change.

### Brief Description of Drawings

Fig. 1 is a schematic view showing a state in which an image-pickup apparatus is installed in an own vehicle;
Fig. 2 is a schematic view showing a state in which a traveling direction is observed from a cabin of the own vehicle;
Fig. 3 is a block diagram showing a structure of the image-pickup apparatus;
Fig. 4 is an explanatory view showing a relation between an acquired image and a display image in one scene;
Fig. 5 is an explanatory view explaining weighting coefficients in a normal state;
Fig. 6A is an explanatory view explaining setting of a window when a course is changed;
Fig. 6B is an explanatory view explaining weighting coefficients when the course is changed;
Fig. 7 is an explanatory view explaining setting of the window in another scene;
Fig. 8 is an explanatory view explaining setting of the window in one more scene;
Fig. 9 is an explanatory view explaining a case in which the window is set while another vehicle is taken into consideration;
Fig. 10 is an explanatory view explaining another example in which another vehicle is taken into consideration;
Fig. 11A is an explanatory view explaining a state in which the setting of the window is changed during a lane change;
Fig. 11B is an explanatory view explaining a state in which the setting of the window is changed during the lane change;
Fig. 11C is an explanatory view explaining a state in which the setting of the window is changed during the lane change;
Fig. 12 is a flowchart showing a control flow of the image-pickup apparatus;
Fig. 13 is a flowchart showing another control flow of the image-pickup apparatus;
Fig. 14 is a flowchart showing a control flow in which weighting is applied and brightness is adjusted; and
Fig. 15 is a flowchart showing a control flow in which weighting is applied and white balance is adjusted.

### Description of Embodiments

While the present disclosure will be explained with reference to an embodiment of the present disclosure, the disclosure according to the claims is not limited to the following embodiment. Further, not all the configurations described in this embodiment are necessary as the means for solving the problem.

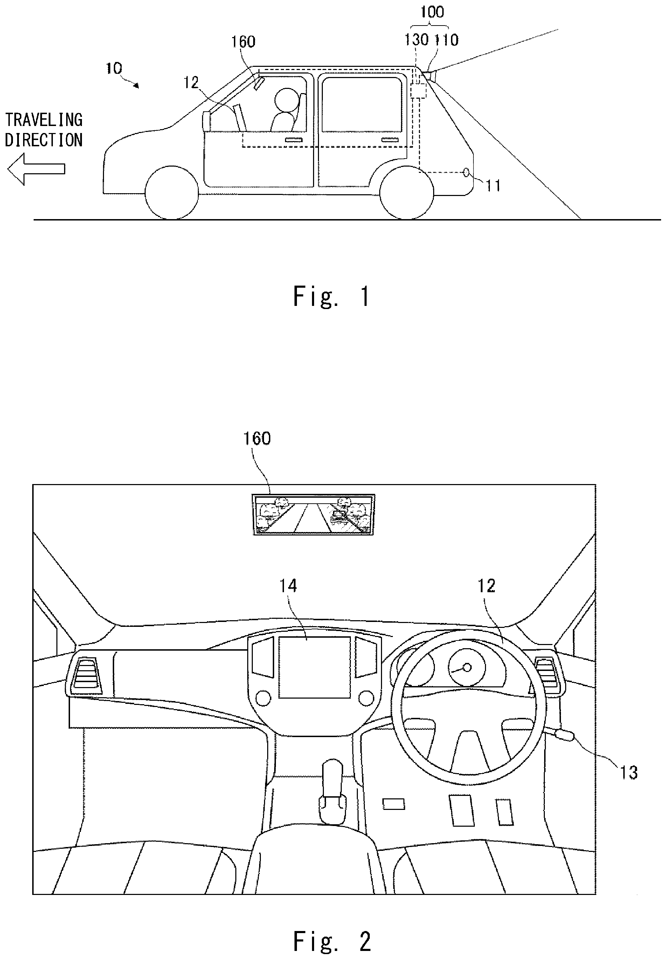

Fig. 1 is a schematic view showing a state in which an image-pickup apparatus 100 according to this embodiment is installed in an own vehicle 10. The image-pickup apparatus 100 is mainly composed of a camera unit 110 and a main body unit 130. The camera unit 110 is installed in a rear part of the vehicle in such a way that the camera unit 110 is able to capture images of the surrounding environment on the rear side of the vehicle with respect to the traveling direction of the own vehicle 10. That is, the camera unit 110 functions as an image-pickup unit that captures the images of the surrounding environment of the own vehicle 10. The images captured by the camera unit 110 are processed by the main body unit 130 and then the processed images are displayed on a display unit 160.

The display unit 160 is a display apparatus that can be replaced by a conventional rearview mirror. Like the conventional rearview mirror, a driver is able to check the rearward situation by observing the display unit 160 during the driving. While an LCD panel is employed as the display unit 160 in this embodiment, various kinds of display apparatuses such as an organic EL display or a head-up display other than the LCD panel may be employed. Further, the display unit 160 may be placed along with the conventional rearview mirror or may be an apparatus capable of switching a display mode by the display and a mirror mode by reflection in a one-way mirror using the one-way mirror.

The own vehicle 10 includes a millimeter wave radar 11 that detects the presence of another vehicle on the rear side of the vehicle. When there is another vehicle, the millimeter wave radar 11 outputs a millimeter wave radar signal as a detection signal. The millimeter wave radar signal includes information indicating the direction of the other vehicle (right rear, directly to the back, left rear) or the approach speed. The main body unit 130 acquires the signal from the millimeter wave radar 11 or the result of detecting the other vehicle by the millimeter wave radar 11.

The own vehicle 10 includes a steering wheel 12 that the driver uses for steering. The steering wheel 12 outputs a steering signal in a right direction when it is rotated to the right, and outputs a steering signal in a left direction when it is rotated to the left. The steering signal includes information indicating, in addition to the steering direction, a steering angle. The main body unit 130 acquires the steering signal via a Controller Area Network (CAN).

Fig. 2 is a schematic view showing a state in which the traveling direction is observed from a cabin of the own vehicle 10. As described above, the display unit 160 is installed in the position where the rearview mirror is installed in the conventional vehicle, and the rearward situation of the vehicle is displayed as an image. The image to be displayed is, for example, a live view image of 60 fps, and is displayed substantially in real time. The display on the display unit 160 is started, for example, in synchronization with an operation of a power switch or an ignition switch, and is ended in synchronization with another operation of the power switch or the ignition switch.

A blinker lever 13, which serves as a direction indicator, is provided on the side of the steering wheel 12. The blinker lever 13 outputs a blinker signal indicating the right direction when the driver presses the blinker lever 13 downwardly and indicating the left direction when the driver presses it upwardly. The main body unit 130 acquires the blinker signal or a signal indicating that the blinker has been operated via the CAN or the like.

A navigation system 14 is provided on the front left of the vehicle as viewed from the driver's seat. When the driver sets the destination, the navigation system 14 searches for the route, shows the route, and displays the current position of the own vehicle 10 on the map. The navigation system 14 outputs, when it shows a right or left turn, a navigation signal indicating the direction prior before it shows a right or left turn. The main body unit 130 is connected to the navigation system 14 by a wire or wirelessly in such a way that the main body unit 130 is able to acquire signals such as the navigation signal and data from the navigation system 14. Further, the image-pickup apparatus 100 may be one of the functions that the system including the navigation system 14 achieves.

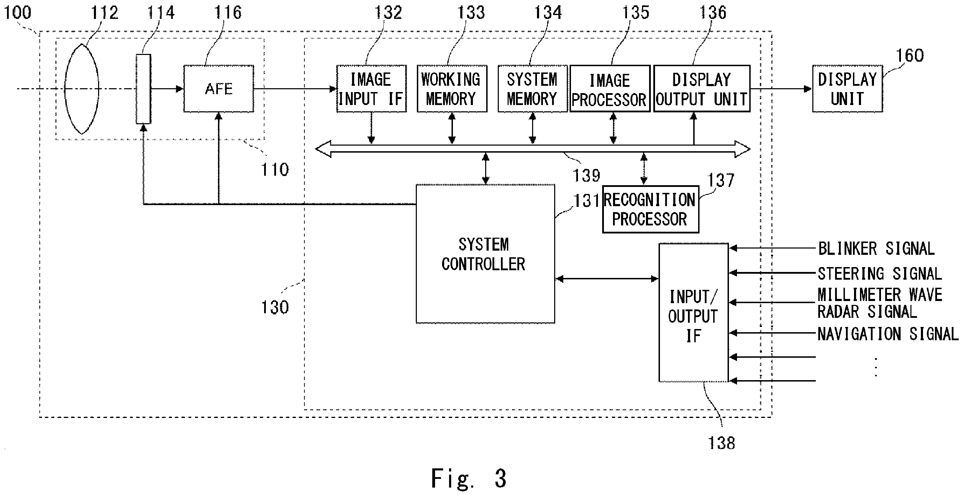

Fig. 3 is a block diagram showing a structure of the image-pickup apparatus 100. As described above, the image-pickup apparatus 100 is mainly composed of the camera unit 110 and the main body unit 130.

The camera unit 110 mainly includes a lens 112, an image-pickup device 114, and an analog front end (AFE) 116. The lens 112 guides a subject light flux that is incident thereon to the image-pickup device 114. The lens 112 may be composed of a plurality of optical lens groups.

The image-pickup device 114 is, for example, a CMOS image sensor. The image-pickup device 114 adjusts a charge accumulation time by an electronic shutter in accordance with the exposure time per one frame that is specified by a system controller 131, conducts a photoelectric conversion, and outputs a pixel signal. The image-pickup device 114 passes the pixel signal to the AFE 116. The AFE 116 adjusts the level of the pixel signal in accordance with an amplification gain instructed by the system controller 131, A/D converts this pixel signal into digital data, and transmits the resulting signal to the main body unit 130 as pixel data. The camera unit 110 may be provided with a mechanical shutter and an iris diaphragm. When the mechanical shutter and the iris diaphragm are included, the system controller 131 is able to use them to adjust the amount of light to be made incident on the image-pickup device 114.

The main body unit 130 mainly includes the system controller 131, an image input IF 132, a working memory 133, a system memory 134, an image processor 135, a display output unit 136, an input/output IF 138, and a bus line 139. The image input IF 132 receives the pixel data from the camera unit 110 connected to the main body unit 130 via the cable and passes the data to the bus line 139.

The working memory 133 is composed of, for example, a volatile high-speed memory. The working memory 133 receives the pixel data from the AFE 116 via the image input IF 132, compiles the received pixel data into image data of one frame, and then stores the compiled image data. The working memory 133 passes the image data to the image processor 135 in a unit of frames. Further, the working memory 133 is used as appropriate as a temporary storage area even in the middle of image processing performed by the image processor 135.

The image processor 135 performs various kinds of image processing on the received image data, thereby generating image data in accordance with a predetermined format. When, for example, moving image data in a form of an MPEG file is generated, each frame image data is subjected to white balance processing, gamma processing and the like, and then the image data is subjected to intraframe and interframe compression processing. The image processor 135 sequentially generates the image data to be displayed from the image data that has been generated and passes the generated data to the display output unit 136.

The display output unit 136 converts the image data to be displayed received from the image processor 135 into an image signal that can be displayed on the display unit 160 and outputs the image signal. That is, the display output unit 136 functions as an output unit that outputs the image captured by the camera unit 110, which is the image-pickup unit, to the display unit 160, which is a display unit. When the main body unit 130 and the display unit 160 are connected to each other by an analog cable, the display output unit 136 D/A converts the image data to be displayed and outputs the image data after the conversion. When, for example, the main body unit 130 and the display unit 160 are connected to each other by an HDMI (registered trademark) cable, the display output unit 136 converts the image data to be displayed into a digital signal in an HDMI form and outputs the data after the conversion. Otherwise, the data may be transmitted using a transmission system such as Ethernet or a form such as LVDS without compressing images. The display unit 160 sequentially displays the image signals received from the display output unit 136.

A recognition processor 137 analyzes the received image data and recognizes, for example, a person, another vehicle, and a separatrix (lane marking). The recognition processing is the existing processing such as, for example, edge detection processing and comparison with various recognition dictionaries.

The system memory 134 is composed of, for example, a non-volatile storage medium such as EEPROM (registered trademark). The system memory 134 stores and holds constant numbers, variable numbers, set values, programs and the like required for the operation of the image-pickup apparatus 100.

The input/output IF 138 is a connection interface with an external device. For example, the input/output IF 138 receives a signal from the external device and passes the received signal to the system controller 131, and receives a control signal such as a signal request for the external device from the system controller 131 and transmits the received signal to the external device. The blinker signal, the steering signal, the signal from the millimeter wave radar 11, and the signal from the navigation system 14 described above are input to the system controller 131 via the input/output IF 138. That is, the input/output IF 138 functions as a detection unit that detects that the own vehicle 10 will change course by acquiring information regarding the course change of the own vehicle 10 in collaboration with the system controller 131.

The system controller 131 directly or indirectly controls each of the components that compose the image-pickup apparatus 100. The control by the system controller 131 is achieved by a program or the like loaded from the system memory 134.

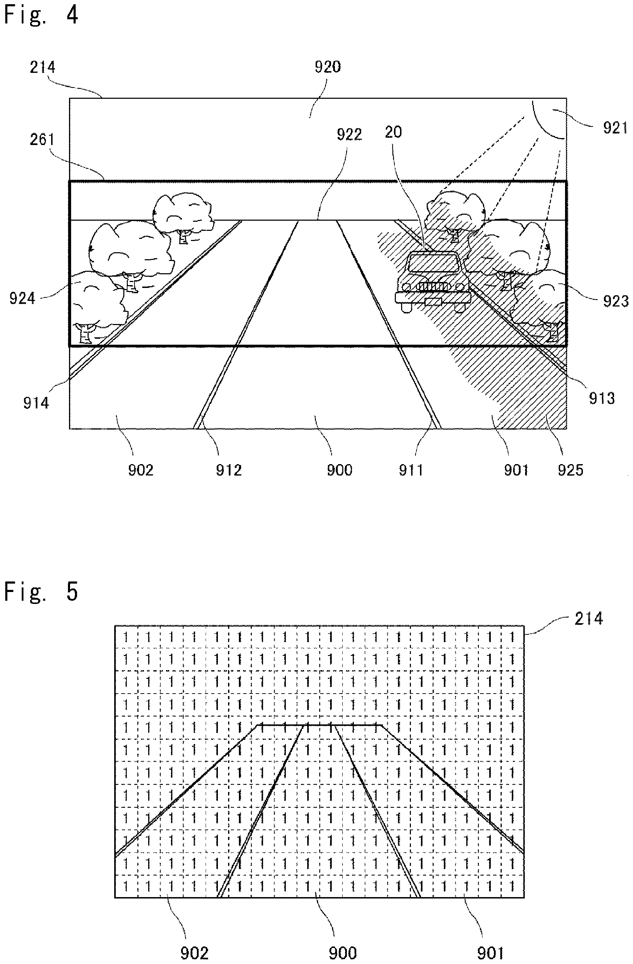

Next, an image-pickup control according to this embodiment will be explained. Fig. 4 is an explanatory view showing a relation between an acquired image and a display image in one scene. In Fig. 4, an image-pickup angle 214 expressed as a range of an outer frame indicates the area of an optical image that the image-pickup device 114 photoelectrically converts. The image-pickup device 114 photoelectrically converts the optical image to be imaged, by pixels aligned two dimensionally (e.g., 8,000,000 pixels) to output a pixel signal.

A display angle of view 261 expressed as a range of an inner frame indicates an image area displayed on the display unit 160. When the display unit 160 can be replaced by the conventional rearview mirror as stated above, a display panel having a horizontally long aspect ratio like the conventional rearview mirror is employed. The display unit 160 displays the area that corresponds to the display angle of view 261 of the image generated from the output of the image-pickup device 114. In this embodiment, the image processor 135 cuts the display angle of view 261 out of the image generated by the image-pickup angle 214 to generate the image data to be displayed. The image displayed on the display unit 160 is in a mirror image relationship to the image captured by the camera unit 110 directed toward the rear side of the own vehicle 10. Therefore, the image processor 135 performs image processing of inverting the mirror image. In the following description, some scenes will be explained based on the processed mirror image to be displayed on the display unit 160 in order to facilitate understanding.

One exemplary scene shown in Fig. 4 includes a road composed of a center lane 900 along which the own vehicle 10 travels, a right lane 901 along which another vehicle 20 travels on the rear side of the own vehicle 10, and a left lane 902 along which no other vehicles travel. The center lane 900 and the right lane 901 are divided from each other by a separatrix 911 drawn on the road surface. In a similar way, the center lane 900 and the left lane 902 are divided from each other by a separatrix 912. Further, the right lane 901 is defined by a separatrix 913 drawn between the right lane 901 and a street where there is a street tree 923 planted on the side of the road and the left lane 902 is defined by a separatrix 914 drawn between the left lane 902 and a street where there is a street tree 924 planted on the side of the road. Above a boundary 922 with the road, the sky 920 occupies about 1/3 of the image-pickup angle 214, and the sun 921 is on the above right. The sunlight is shielded by the street tree 923 and a part of the right lane 901 and most of the other vehicle 20 that travels along the right lane are included in the shade 925.

In the normal state in which the own vehicle 10 goes straight along the center lane 900, on the premise that the driver observes the overall rear environment, the system controller 131 controls the camera unit 110 in such a way that the overall image to be acquired has a balanced brightness. Specifically, the system controller 131 generates one piece of image data by executing image-pickup processing by a predetermined image-pickup control value, and executes an AE operation using this image data.

The AE operation is, for example, an operation of calculating an average luminance value of the overall image from the luminance value of each area of the image that has been generated and determining the image-pickup control value such that the difference between the average luminance value and the target luminance value becomes 0. More specifically, the AE operation is an operation of converting the difference between the average luminance value that has been calculated and the target luminance value into a correction amount of the image-pickup control value by referring to, for example, a lookup table stored in the system memory 134, adding the resulting value to the previously used image-pickup control value, and determining the obtained value as the image-pickup control value for the next image-pickup processing. The image-pickup control value includes at least one of a charge accumulation time (it corresponds to the shutter speed) of the image-pickup device 114 and the amplification gain of the AFE 116. When the iris diaphragm is included, the F value of the optical system that may be adjusted by driving the iris diaphragm may be included.

When the average luminance value of the overall image is calculated, the luminance value of each area is multiplied by a weighting coefficient. Fig. 5 is an explanatory view explaining weighting coefficients in the normal state in which the own vehicle 10 goes straight along the center lane 900. In Fig. 5, each of the lanes in the scene shown in Fig. 4 is shown in accordance with the following description.

In this embodiment, as shown by the dotted lines in Fig. 5, the image-pickup angle 214 is divided into a plurality of divided areas in a lattice pattern. The weighting coefficient is given for each divided area. The system controller 131 calculates the average luminance value of the overall image by multiplying the luminance value of the pixel included in each area by the weighting coefficient. As shown in Fig. 5, the weighting coefficients in the normal state are all 1. That is, weighting is not substantially applied. Therefore, by treating all the areas evenly, the image-pickup control value whereby the image having an overall balanced brightness is generated is determined. When the image has an overall balanced brightness, the subject included in the shade 925 becomes relatively dark and the sky 920 becomes relatively bright in Fig. 4. The number of divided areas into which the image-pickup angle 214 is divided may be arbitrarily determined depending on the operation capabilities or the like of the system controller 131.

The weighting coefficient in the normal state is applied not only in the case in which the own vehicle 10 travels along the center lane 900 but also in a case in which the own vehicle 10 travels along an arbitrary lane without changing lanes. Further, the weighting coefficient in the normal state is not limited to the example in which the weighting coefficients are all 1 like the aforementioned example. As another example of the weighting coefficient in the normal state, the weighting may be set in such a way that the weighting in the central part of the image-pickup angle 214 or the display angle of view 261 becomes larger. The central part here may mean the central part in the vertical direction and the lateral direction, or the central part in any one of the vertical direction and the lateral direction of the image-pickup angle 214 or the display angle of view 261.

Further, as another example of the weighting coefficient in the normal state, the weighting coefficient in the lower part of the image-pickup angle 214 or the display angle of view 261 may be set to be larger. The "lower part" here means, for example, the part lower than the central part in the vertical direction of the image-pickup angle 214 or the display angle of view 261 or the part lower than the boundary 922 between the sky 920 and the road. In the following description, the weighting coefficient in the normal state includes the above.

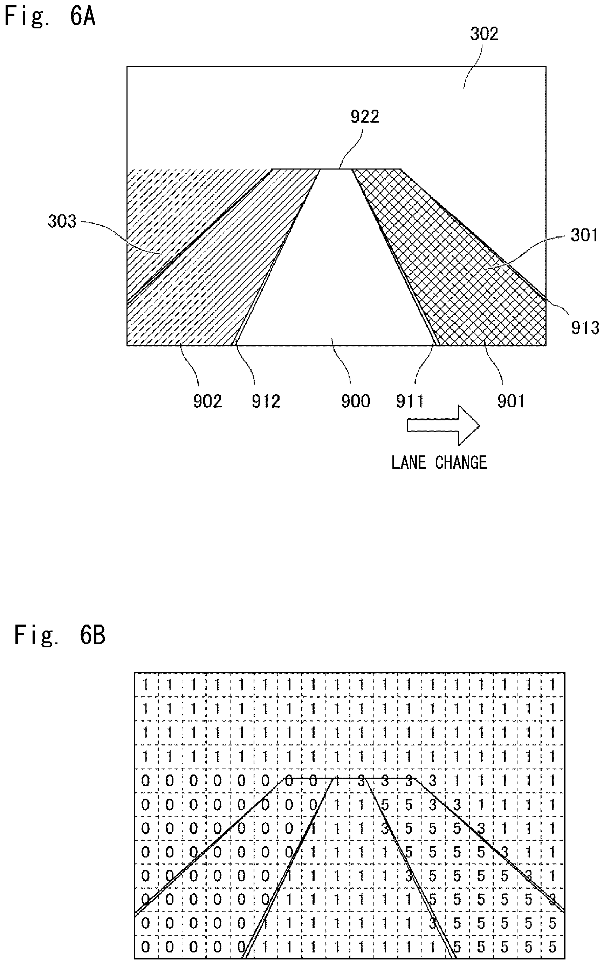

Figs. 6A and 6B are explanatory views each explaining the setting of the window and the weighting coefficients at the time of the course change from the center lane 900 to the right lane 901. In particular, Fig. 6A is an explanatory view explaining the setting of the window and Fig. 6B is a view explaining a relation between the window that has been set and the weighting coefficients to be allocated.

When the system controller 131 has detected the course change to the right direction via the input/output IF 138, the system controller 131 executes the setting of the window for the image that has been acquired up to the current time. The system controller 131 causes the recognition processor 137 to execute image processing such as edge enhancement or object recognition processing to extract the separatrixes 911, 912, and 913, and the boundary 922. Then the extracted lines are subjected to interpolation processing or the like, thereby determining the area of the right lane 901 to which the course will be changed, which is defined to be a weighting window 301. Further, the area of the left lane 902, which is the opposite of the right lane 901 with respect to the center lane 900, and the area on the left side of the left lane 902 are determined, and these areas are collectively defined to be a reduction window 303. The area other than the weighting window 301 and the reduction window 303 is defined to be a normal window 302.

After the system controller 131 defines the weighting window 301, the normal window 302, and the reduction window 303, a weighting coefficient that is larger than that applied in the normal state is given to the divided areas included in the weighting window 301, a weighting coefficient that is the same as that applied in the normal state is given to the areas included in the normal window 302, and a weighting coefficient that is smaller than that applied in the normal state is given to the reduction window 303. In the example shown in Fig. 6B, a weighting coefficient of 5 is given to the divided areas of which 80% or larger is included in the weighting window 301, and a weighting coefficient of 3 is given to the divided areas of which 30% or larger but 80% or smaller is included in the weighting window 301. On the other hand, a weighting coefficient of 0 is given to the divided areas included in the reduction window 303.

When the weighting is applied as stated above, the influence of the area of the right lane 901 in which the weighting window 301 is set becomes relatively large, and the influence of the area on the left side including the left lane 902 in which the reduction window 303 is set becomes relatively small (in the example shown in Fig. 6B, 0). In the example of the scene shown in Fig. 4, since the area of the right lane 901 is partially included in the shade 925, the luminance value thereof is relatively small (dark). However, when the influence of the luminance value of this area becomes large due to the weighting, the average luminance value calculated as the overall image becomes small and the difference between the average luminance value and the target luminance value becomes large. When the difference between the average luminance value and the target luminance value becomes large, the correction amount as the image-pickup control value becomes large. In this case, the image-pickup control value that makes the overall image brighter is determined.

When the image-pickup control value is determined by the result of the AE operation in which weighting is applied as stated above, it is expected that the brightness of the subject included in the area of the right lane 901 in the image captured with this image-pickup control value will become appropriate. That is, while the subject included in the shade 925 is dark and hard to be visually recognized in the image in the normal state, it is possible to determine in which direction the driver wants to change lanes from various kinds of signals input to the input/output IF 138 and to optimize the brightness of the subject included in the area of the lane in the lane change direction. That is, when the driver changes the course, the camera unit 110 is controlled in such a way that the brightness of the partial area in this direction becomes appropriate, whereby it is possible to present the image that enables the driver to appropriately check the right lane 901, which is the lane after the course change.

While the information regarding the course change of the own vehicle 10 has been detected using the blinker signal, the steering signal, the signal from the millimeter wave radar 11, and the signal from the navigation system 14 in the aforementioned example, any one of these signals may be used or some of these signals may be combined with one another. Further, other signals related to the course change may instead be used. Furthermore, the system controller 131 may detect the information regarding the course change using means other than the input/output IF 138. When, for example, the change in the separatrix is detected from frame images continuously captured by the camera unit 110, the motion of the own vehicle 10 in the right or left direction can be detected. The result of this detection can be used as the information regarding the course change.

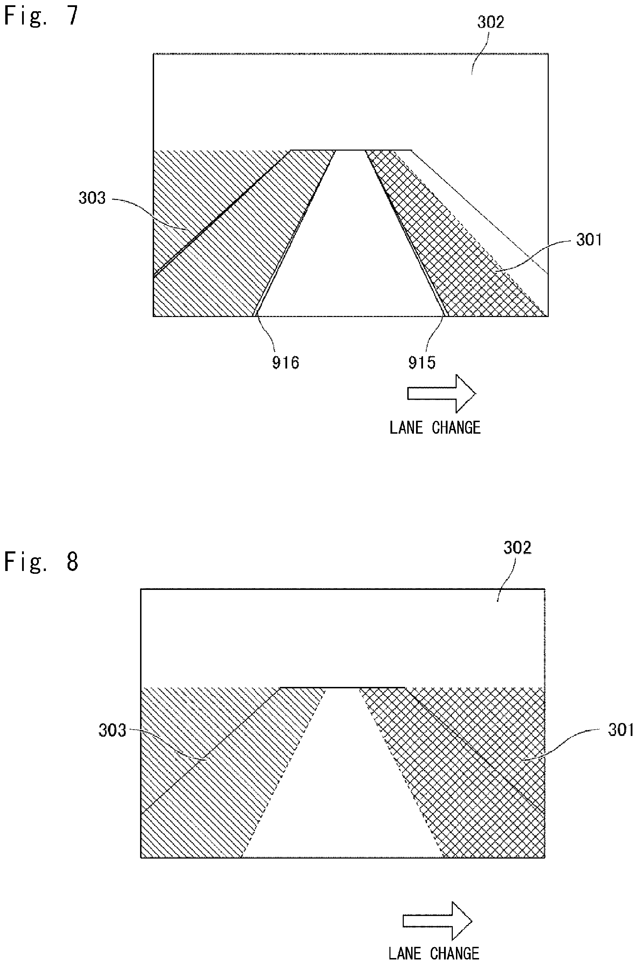

In the following description, some variations of the setting of the window will be explained. Fig. 7 is an explanatory view explaining the setting of the window in another scene. In the examples shown in Figs. 6A and 6B, when a plurality of separatrixes are detected in the lane change direction, the area defined based on the two separatrixes 911 and 913 adjacent to the own vehicle 10 is defined to be the weighting window 301. On the other hand, Fig. 7 is an example in a case in which only one separatrix 915 is detected in the lane change direction. In this case, based on the separatrix 915 that has been detected, the area having a predetermined width from the separatrix 915 in the lane change direction is defined to be the weighting window 301. The width may be made smaller in a direction away from the own vehicle 10 in accordance with the inclination of the separatrix 915 that has been detected. By setting the weighting window 301 in this way, even when the lane after the change cannot be accurately detected, the area that the driver desires to observe can be adjusted to have an appropriate brightness even partially. When a separatrix 916 is detected in the direction opposite to the lane change direction, the reduction window 303 may be set in a way similar to that in the examples shown in Figs. 6A and 6B.

Fig. 8 is an explanatory view explaining the setting of the window in one more scene. Fig. 8 shows an example in which the separatrix cannot be detected in the lane change direction. In this case, a virtual line is set in the straight forward direction adjacent to the own vehicle 10, and the area on the side of the lane change with respect to this line is defined to be the weighting window 301. By setting the weighting window 301 in this way, visibility of the subject at least on the side of the lane change can be improved. Further, when the own vehicle 10 makes a right or left turn, it becomes easy to visually recognize a two-wheeled vehicle and the like that travel on a right rear side or a left rear side of the own vehicle 10. The virtual line may be set in the straight forward direction adjacent to the own vehicle 10 also in the direction opposite to the lane change direction, and the reduction window 303 may be set in a similar way.

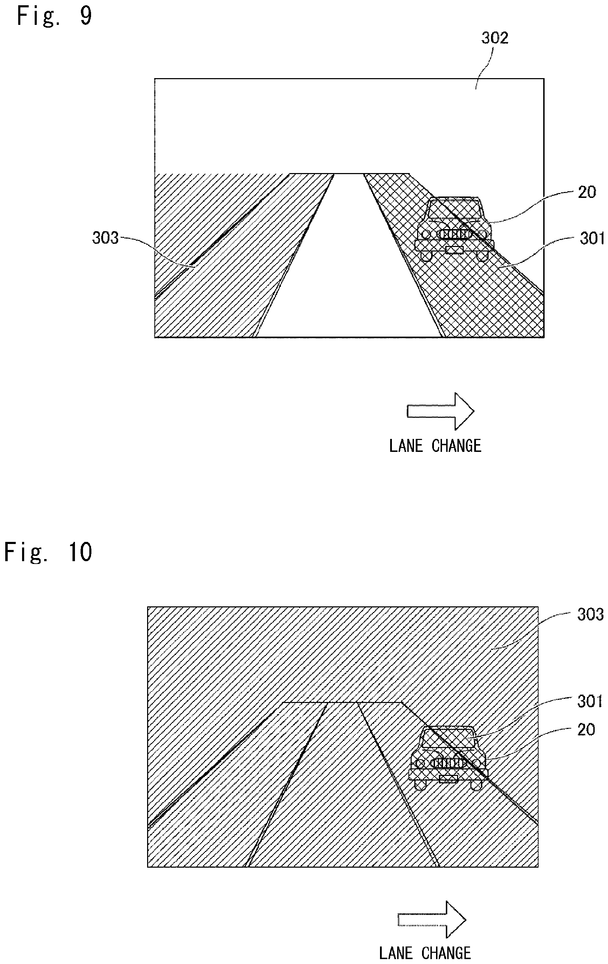

Fig. 9 is an explanatory view explaining a case in which the window is set while the other vehicle 20 is taken into consideration. In the case shown in Fig. 9, the recognition processor 137 performs, besides processing of recognizing the separatrix, processing of recognizing the vehicle. While the contour of the window has been defined based on the lane and the road surface in the examples shown in Figs. 6A to 8, Fig. 9 shows an example in which, when another vehicle or the like is traveling in the lane change direction, the weighting window 301 is defined to include this area. More specifically, the weighting window 301 is defined by adding the contour of the other vehicle 20 to the weighting window 301 shown in Fig. 6A. By defining the weighting window 301 in this way, visibility of the other vehicle 20 is further improved. When there are a plurality of other vehicles, the contour that contains all of them may be added or the contour of only the vehicle that is the closest to the own vehicle 10 may be added. The image processor 135 detects the contour of the other vehicle 20 based on, for example, a motion vector detected from the difference between a plurality of consecutive frame images. Alternatively, the image processor 135 may determine whether to add the contour of the other vehicle 20 by measuring the distance between the own vehicle 10 and the other vehicle 20 using the millimeter wave radar. Further, the weighting coefficient of the weighting window 301 in the case in which the other vehicle is detected may be made larger than the weighting coefficient of the weighting window 301 in the case in which the other vehicle is not detected.

Fig. 10 is an explanatory view explaining another example in which the other vehicle 20 is taken into consideration. While the lane and the road surface area after the lane change are included in the weighting window 301 in the example shown in Fig. 9, Fig. 10 is an example in which only the area included in the contour of the other vehicle 20 except for the road surface area is defined to be the weighting window 301. When the weighting window 301 is thus defined, the driver is able to observe the presence and the motion of the other vehicle that may need to be particularly checked when changing lanes with a higher visibility. In the example shown in Fig. 10, the area other than the weighting window 301 is defined to be the reduction window 303, and thus the influence of the subject in the other area is eliminated.

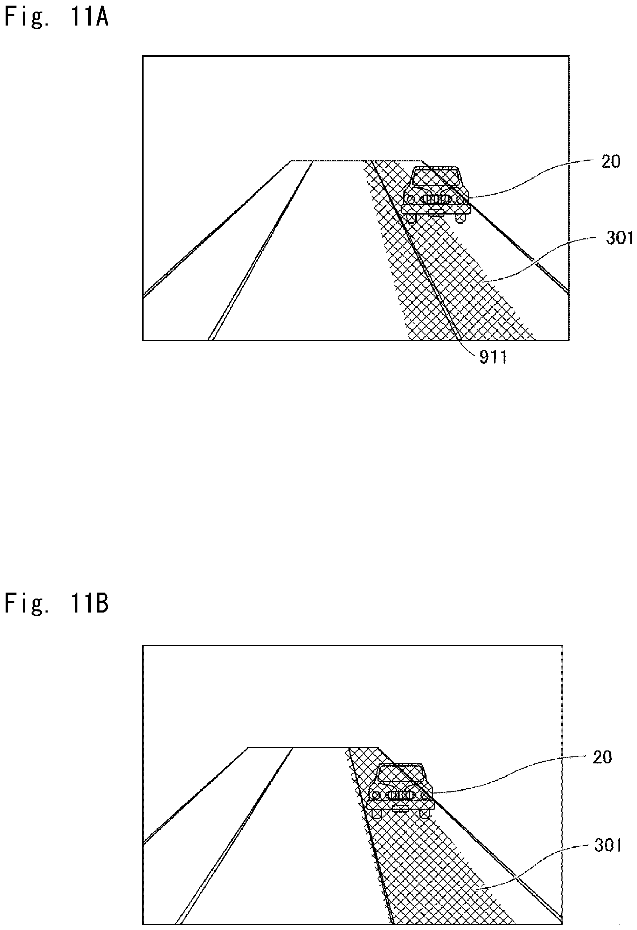

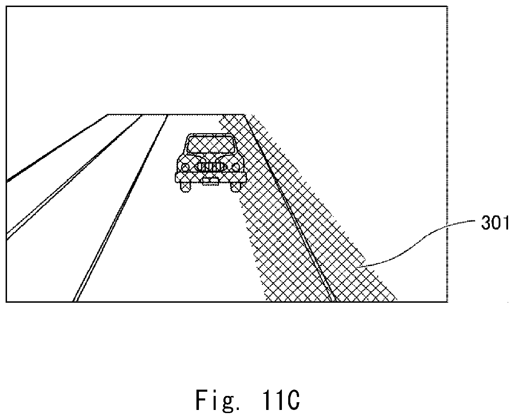

Figs. 11A-11C are explanatory views each explaining a state in which the setting of the window is dynamically changed during the lane change. In particular, Fig. 11A shows a state just after the lane change is started, Fig. 11B shows a state in which the vehicle straddles the lanes, and Fig. 11C shows a state just after the lane change has been completed.

As shown in Fig. 11A, when the lane change is started, first, a virtual line is set in the straight forward direction adjacent to the own vehicle 10, and the area on the side of the lane change with respect to this line is defined to be the weighting window 301. In this case, if the separatrix 911 has been extracted, the line may be set along the separatrix 911. Further, when there is the other vehicle 20, the weighting window 301 is defined to include the area of the other vehicle 20.

As shown in Fig. 11B, the weighting window 301 is defined by adding the area of the other vehicle 20 whose positional relation with respect to the own vehicle 10 is changed while relatively fixing the area of the weighting window 301 set on the road surface with respect to the own vehicle 10. This updating of the weighting window 301 is continued until the time just before the completion of the lane change shown in Fig. 11C, and when the lane change is completed, the processing in the normal state in which weighting is not applied is started again. That is, during the period from the timing when the own vehicle 10 has started the course change to the timing when it ends the course change, the weighting is varied in the image depending on the situation of the course change.

As described above, by dynamically updating the weighting window 301, the driver is able to continuously observe the subject in the lane change direction at an appropriate brightness even during the lane change. While the area of the weighting window 301 set on the road surface is relatively fixed with respect to the own vehicle 10 in the aforementioned example, as long as the lane after the change is recognized by the separatrix, the lane area may be defined to be a fixed area of the weighting window 301. In this case, the lane area may be extracted for each frame since the lane area is relatively moved in the angle of view while the lane change is being performed.

Further, the system controller 131 may determine the end of the lane change from the change in the signal to be input to the input/output IF 138. For example, when the blinker signal is input, the timing when the reception of the blinker signal is stopped can be determined to be the end of the lane change. When the millimeter wave radar signal is input, the timing when the distance from the own vehicle 10 to the other vehicle 20 indicates a predetermined value can be determined to be the end of the lane change. Further, when the change in the separatrix is detected from the frame images continuously captured by the camera unit 110, the system controller 131 may determine the timing when the movement of the separatrix in the right or left direction is ended to be the end of the lane change.

While the some variations of the window settings have been explained with reference to Figs. 6A to 11C, the system controller 131 may combine these methods and appropriately select at least one of them in accordance with the traveling environment of the own vehicle 10. While the example in which the lane is changed in the right direction has been explained in each of the aforementioned examples, the processing similar to that performed when the lane is changed in the right direction is performed also in the example in which the lane is changed in the left direction in such a way that the weighting window 301 is set in the left area.

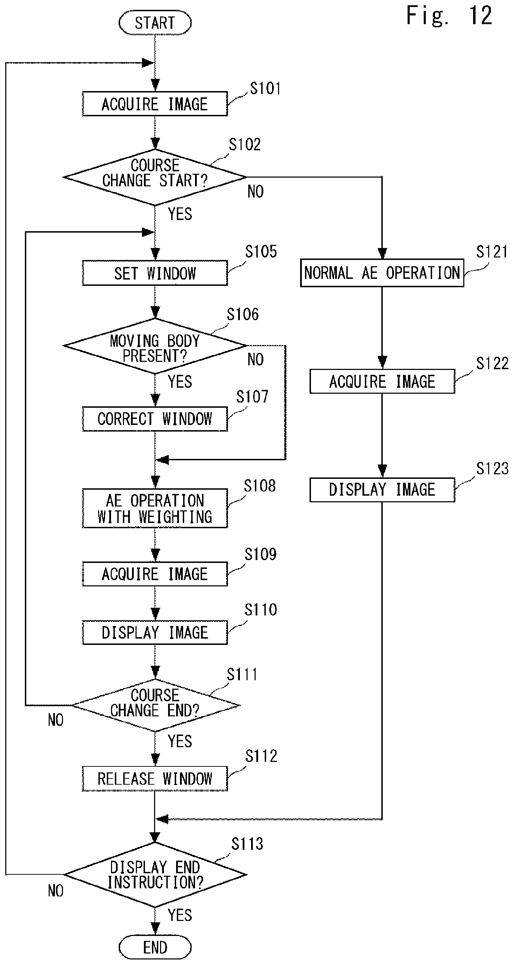

Next, one example of the control flow of the image-pickup apparatus 100 will be explained. Fig. 12 is a flowchart showing a control flow of the image-pickup apparatus 100. The flow starts when, for example, the power switch is operated.

In Step S101, the system controller 131 sends the image-pickup control signal including the image-pickup control value to the camera unit 110, causes the camera unit 110 to capture images, and causes the camera unit 110 to transmit the pixel data to the main body unit 130. Then the process goes to Step S102, where the system controller 131 determines whether information indicating that the own vehicle 10 will start the course change has been acquired via the input/output IF 138 or the like.

When it is determined that the information indicating that the course change will start has not been acquired, the process goes to Step S121, where the system controller 131 causes the image processor 135 to process the pixel data acquired in Step S101 to form the display image, and performs the AE operation with weighting processing in which the weighting coefficient in the normal state is applied, thereby determining the image-pickup control value. Then the process goes to Step S122, where the system controller 131 sends image-pickup control information that includes the image-pickup control value determined based on the weighting coefficient in the normal state to the camera unit 110, causes the camera unit 110 to capture images, and causes the camera unit 110 to transmit the image data to the main body unit 130. When the main body unit 130 acquires the image data, the system controller 131 goes to Step S123, where the system controller 131 causes the image processor 135 to generate the display image and causes the display unit 160 to display the generated image via the display output unit 136. When it is determined in Step S102 that the information indicating that the course change will start has not been acquired, in place of the aforementioned AE operation with weighting processing in which the weighting coefficient in the normal state is applied, the AE operation without weighting described with reference to Fig. 5 may be performed. The same goes for the AE operation with weighting processing in which the weighting coefficient in the normal state is applied according to the other embodiments. After that, the process goes to Step S113. In Step S113, when a display end instruction has not been accepted, the process goes back to Step S101, where the image acquisition is executed using the image-pickup control value determined in Step S121, and the processing in the normal state in which the own vehicle 10 goes straight forward is repeatedly executed.

When it is determined in Step S102 that the information indicating that the course change will start has been acquired, the process goes to Step S105, where the system controller 131 causes the image processor 135 to process the pixel data acquired in Step S101 and sets a window such as the weighting window. In this case, the weighting window is set in the area in which the course is changed, as described above.

Then the process goes to Step S106, where the system controller 131 determines whether there is a moving body such as another vehicle. The system controller 131 may determine the presence of the moving body using the millimeter wave radar signal, or may determine the presence of the moving body from a motion vector of the subject when it has already acquired images of a plurality of frames. When the millimeter wave radar signal is used, the system controller 131 functions as a detection unit that detects the moving body moving in the vicinity of the vehicle in collaboration with the input/output IF. In a similar way, when the motion vector is used, the system controller 131 functions as a detection unit in collaboration with the image processor 135. When the system controller 131 determines a moving body is present, the system controller 131 extracts the area of the moving body from the image and performs correction to add this area to the weighting window 301 (Step SI07).

When the weighting window is corrected in Step S107 or when it is determined in Step S106 that there is no moving body, the process goes to Step S108, where the system controller 131 performs the AE operation with weighting, thereby determining the image-pickup control value. Then the process goes to Step S109, where the system controller 131 sends the image-pickup control signal including the image-pickup control value to the camera unit 110, causes the camera unit 110 to capture images, and causes the camera unit 110 to transmit the pixel data to the main body unit 130. When the main body unit 130 acquires the pixel data, the process goes to Step S110, where the system controller 131 causes the image processor 135 to process the acquired data to form the display image, and causes the display unit 160 to display the display image via the display output unit 136.

Then the process goes to Step S111, where the system controller 131 determines whether it has acquired the information indicating that the own vehicle 10 will end the course change via the input/output IF 138 or the like. When it is determined that it has not acquired the information indicating that the own vehicle 10 will end the course change, the process goes back to Step S105, where the processing at the time of the lane change is continued. The system controller 131 repeats Steps S105 to S111, thereby updating the display image substantially in a real time in accordance with a predetermined frame rate.

When it is determined in Step Sill that the information indicating that the own vehicle 10 will end the course change has been acquired, the process goes to Step S112, where the system controller 131 releases the window that has been set. Then the process goes to Step S113, where it is determined whether the display end instruction has been accepted. The display end instruction is, for example, another operation of the power switch. When it is determined that the display end instruction has not been accepted, the process goes back to Step S101. When it is determined that the display end instruction has been accepted, the series of processing is ended.

In the aforementioned processing, when it is determined that a moving body is present (YES in Step S106), a correction to add the area of the moving body to the weighting window 301 is executed (Step S107). This is an example of the window setting in consideration of the moving body described with reference to Fig. 9 and the like. A flow in which the moving body is not taken into consideration, Steps S106 and S107 are omitted, and the weighting window 301 is not corrected may instead be employed.

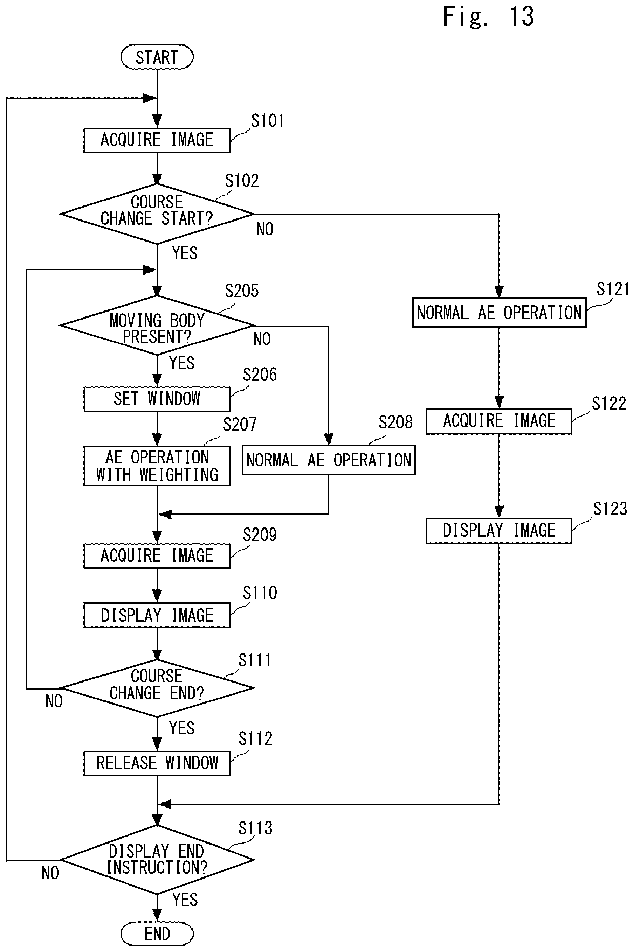

Fig. 13 is a flowchart showing a control flow according to another example of the image-pickup apparatus 100. Processes the same as those shown in Fig. 12 are denoted by the same step numbers as those shown in Fig. 12 and descriptions thereof will be omitted. While the weighting window is set after the acquisition of the information indicating that the course change will start and the AE operation with weighting is executed in the control flow shown in Fig. 12, in this control flow, weighting is not applied when the moving body has not been detected even after the acquisition of the information indicating that the course change will start.

When the system controller 131 has acquired, in Step S102, the information indicating that the course change will start, the process goes to Step S205, where it is determined whether there is a moving body such as another vehicle. When it is determined that there is no moving body, the process goes to Step S208, where the system controller 131 executes the AE operation with weighting processing in which the weighting coefficient in the normal state is applied and determines the image-pickup control value, similar to the processing from Steps S121 to S123. On the other hand, when it is determined that a moving body is present, the process goes to Step S206, where the system controller 131 extracts the area of the moving body from the image, and sets the weighting window in the area in the direction in which the course is changed in such a way as to include this area. Then the process goes to Step S209, where the system controller 131 performs the AE operation with weighting, thereby determining the image-pickup control value.

The system controller 131 sends the image-pickup control signal that includes the image-pickup control value determined in Step S207 or the image-pickup control value determined in Step S208 to the camera unit, causes the camera unit to capture images, and causes the camera unit to transmit the pixel data to the main body unit 130 (Step S209). When the main body unit 130 acquires the pixel data, the system controller 131 goes to Step S110.

According to the aforementioned control flow, when there is a moving body that needs to be particularly paid attention to at the time of the course change, the driver is able to visually recognize this moving body at an appropriate brightness. When there is no moving body that needs to be paid attention to, the driver is able to visually recognize the rear environment while prioritizing the overall brightness balance.

While the image processor 135 performs the AE operation with weighting on the overall image generated by the image-pickup angle 214 in the embodiment described above, the system controller 131 may first cut the display angle of view 261 out of the overall image and perform the operation on the image of the display angle of view 261. By performing the AE operation with weighting on the image of the display angle of view 261, even in a case in which there are subjects whose luminance levels are extremely high or low in the area of the image-pickup angle that has been removed, a more appropriate image-pickup control value can be determined without being affected by these subjects.

In the embodiment described above, the example in which the AE operation with weighting is performed in such a way that the weighting to be applied becomes larger in the course change direction in the image captured by the camera unit 110 that functions as the image-pickup unit based on the information regarding the course change detected by the input/output IF 138 that serves as the detection unit, and the camera unit 110 is controlled based on the result of the AE operation has been explained. However, the improvement in the visibility of the image can be achieved not only by the image-pickup control by the AE operation but also by image processing by the image processor 135.

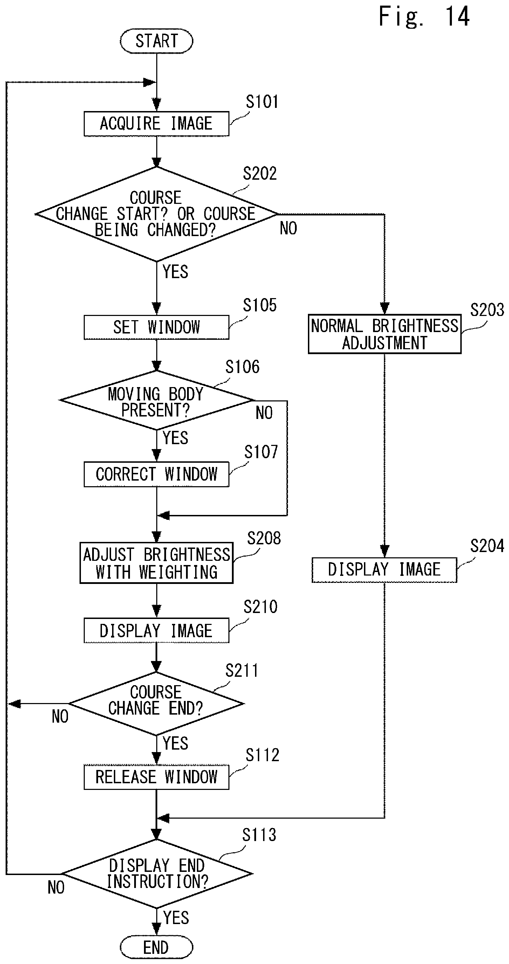

As an example of improving the visibility by the image processing, first, an example in which the weighting is applied in such a way that the weighting becomes larger in the course change direction in the image captured by the camera unit 110 based on the information regarding the course change detected by the input/output IF 138 and the image processing of the brightness adjustment is performed will be explained. Fig. 14 is a flowchart showing a control flow in which the weighting is applied and the brightness is adjusted. Processes that are the same as those described with reference to Fig. 12 will be denoted by the same step numbers as those shown in Fig. 12 and descriptions thereof will be omitted.

After the system controller 131 causes the camera unit 110 to capture images and causes the camera unit 110 to transmit the pixel data to the main body unit 130 in Step S101, the system controller 131 determines in Step S202 whether it has acquired information indicating that the own vehicle 10 has started the course change or information indicating that the own vehicle 10 is continuing the course change via the input/output IF 138 or the like.

When the system controller 131 has determined that no information item has been acquired, the process goes to Step S203, where the image processor 135 executes normal brightness adjustment on the pixel data acquired in Step S101. The normal brightness adjustment is to perform brightness adjustment in which the weighting coefficient in the normal state is applied. Alternatively, in place of the brightness adjustment in which the weighting coefficient in the normal state is applied, as described above with reference to Fig. 5, all the divided areas may be evenly treated (this corresponds to applying the weighting coefficient 1), thereby adjusting each pixel value in such a way that the average lightness of the overall image becomes a predetermined target lightness. The system controller 131 causes the display unit 160 to display the display image whose brightness has been thus adjusted via the display output unit 136 in Step S204. The process then goes to Step S113.

When it is determined in Step S202 that the information indicating that the own vehicle 10 has started the course change or the information indicating that the own vehicle 10 is continuing the course change has been acquired, the system controller 131 sets the window such as the weighting window in Step S105. Further, the weighting window 301 is corrected in accordance with a condition (Steps S106 and S107). When the moving body is not taken into consideration, the processing of Steps S106 and S107 may be omitted.

When the process goes to Step S208, the image processor 135 executes the brightness adjustment with weighting on the pixel data acquired in Step S101. Specifically, as described with reference to Figs. 6A to 11C, the weighting coefficient is given to the divided area to calculate the average lightness of the overall image. For example, the pixel that belongs to the divided area to which the weighting coefficient 0.5 has been given is calculated to correspond to 0.5 pixels in the calculation of the average lightness, and the pixel that belongs to the divided area to which the weighting coefficient 2.0 has been given is calculated to correspond to two pixels in the calculation of the average lightness. The image processor 135 adjusts each pixel value in such a way that the average lightness thus adjusted becomes a predetermined target lightness. The system controller 131 converts the image whose brightness has been thus adjusted into a display image to be displayed, and causes the display unit 160 to display the display image via the display output unit 136 in Step S210.

Next, the process goes to Step S211, where the system controller 131 determines whether it has acquired the information indicating that the own vehicle 10 will end the course change via the input/output IF 138 or the like. When it is determined that it has not acquired the information indicating that the own vehicle 10 will end the course change, the process goes back to Step S101. When it is determined that the own vehicle 10 has acquired the information indicating that the own vehicle 10 will end the course change, the process goes to Step S112.

As described above, even when the brightness is adjusted by the image processing, the driver is able to appropriately check the state of the lane after the course change during the course change.

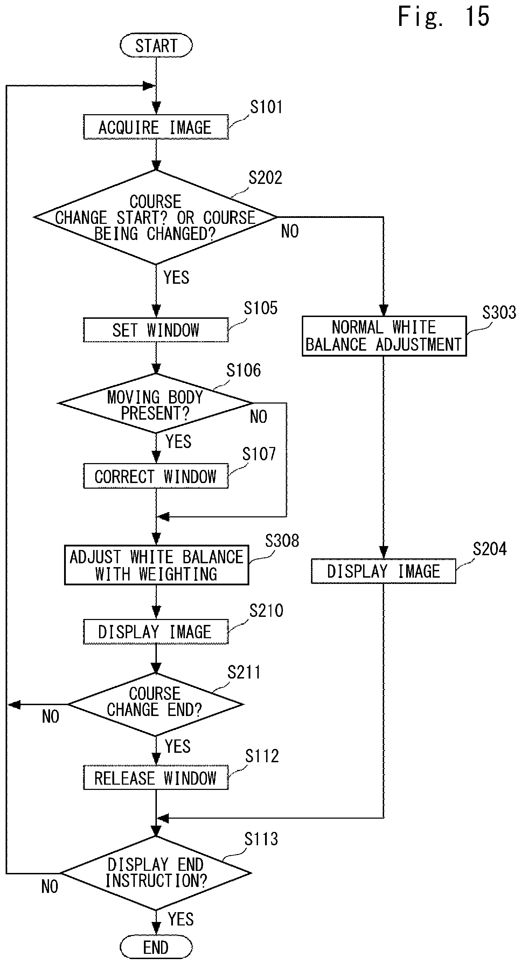

As an example of improving the visibility by the image processing, next, an example in which the weighting is applied in such a way that the weighting becomes larger in the course change direction in the image captured by the camera unit 110 based on the information regarding the course change detected by the input/output IF 138 and the image processing of the white balance adjustment is performed will be explained. Fig. 15 is a flowchart showing a control flow in which the weighting is applied and the white balance is adjusted. The processes the same as those described with reference to Figs. 12 and 14 are also denoted by the same step numbers and the descriptions thereof will be omitted.

When the system controller 131 has determined in Step S202 that no information item has been acquired, the process goes to Step S303, where the image processor 135 executes normal white balance adjustment on the pixel data acquired in Step S101. The normal white balance adjustment is to perform the white balance adjustment with weighting processing in which the weighting coefficient in the normal state is applied. Alternatively, in place of the white balance adjustment with weighting processing in which the weighting coefficient in the normal state is applied, as described with reference to Fig. 5, all the divided areas may be evenly treated (this corresponds to applying the weighting coefficient 1), the white balance gain for each RGB may be calculated, whereby the white balance adjustment may be performed. The system controller 131 causes the display unit 160 to display the display image in which the white balance has been thus adjusted via the display output unit 136 in Step S204. Then the process goes to Step S113.

When it is determined in Step S202 that the information indicating that the own vehicle 10 has started the course change or the information indicating that the own vehicle 10 is continuing the course change has been acquired, the system controller 131 sets the window such as the weighting window in Step S105. Further, the weighting window 301 is corrected in accordance with a condition (Steps S106 and S107). When the moving body is not taken into consideration, the processing of Steps S106 and S107 may be omitted.

When the process goes to Step S208, the image processor 135 executes the white balance adjustment with weighting on the pixel data acquired in Step S101. Specifically, as described above with reference to Figs. 6A to 11C, the weighting coefficient is given to the divided area to calculate the white balance gain for each RGB. For example, the pixel value of the R pixel that belongs to the divided area to which the weighting coefficient 0.5 has been given is calculated to correspond to 0.5 pixels in the calculation of the white balance gain of R, and the pixel value of the R pixel that belongs to the divided area to which the weighting coefficient 2.0 has been given is calculated to correspond to two pixels in the calculation of the white balance gain of R. The image processor 135 adjusts the RGB values of each pixel using each white balance gain of the RGB thus calculated. The system controller 131 converts the image whose white balance has been thus adjusted into a display image to be displayed, and causes the display unit 160 to display the display image via the display output unit 136 in Step S210.

As described above, by adjusting the white balance, the driver is able to visually correctly recognize the color of the object after the course change during the course change.

The brightness adjustment and the white balance adjustment by the image processor 135 described above with reference to Figs. 14 and 15 may be applied in combination with each other in the series of processing. Further, while the process flows shown in Figs. 14 and 15 are based on the process flow shown in Fig. 12, they may be based on the process flow shown in Fig. 13 and the weighting operation may be performed.

Furthermore, the image-pickup control based on the result of the AE operation with the weighting described with reference to Figs. 12 and 13 may be combined with the image processing with the weighting described with reference to Figs. 14 and 15. When, for example, the brightness is adjusted by both the image-pickup control and the image processing, it can be expected that the object after the course change will have a more appropriate brightness.

The image-pickup apparatus 100 according to this embodiment described above has been described as being an apparatus that includes the camera unit 110 directed toward the rear side of the own vehicle 10 and supplies a rear image to the display unit 160 that can be replaced by the rearview mirror. However, the present disclosure may be applied also to an image-pickup apparatus that includes the camera unit 110 directed toward the front side of the own vehicle 10. For example, a camera unit that captures the area in the front of a large vehicle, which becomes a blind area from the driver's seat in the large vehicle, will improve the convenience for the driver when the subject in the course change direction, including a course change such as a right turn or a left turn, is displayed at an appropriate brightness.

While the images described above have been described as the images successively displayed on the display unit 160 after the processing of the images periodically captured by the camera unit 110, the images may be, for example, still images or moving images to be recorded captured at a predetermined timing or in accordance with a timing of an event that has occurred.

The operations, procedures, steps, and stages of each process performed by an apparatus, system, program, and method shown in the embodiment described above can be performed in any order as long as the order is not indicated by "prior to", "before," or the like and as long as the output from a previous process is not used in a later process. Even if the process flow is described using phrases such as "first" or "next" for the sake of convenience, it does not necessarily mean that the process must be performed in this order.

This application is based upon and claims the benefit of priority from Japanese Patent Application No. 2016-103392, filed on May 24, 2016, and Japanese Patent Application No. 2017-015157, filed on January 31, 2017.

### Industrial Applicability

As described above, the image-pickup apparatus, the image-pickup display method, and the image-pickup display program described in this embodiment can be used as, for example, an image-pickup apparatus mounted on an automobile, an image-pickup display method executed in the automobile, and an image-pickup display program executed by a computer of the automobile.

### Reference Signs List

10 OWN VEHICLE, 11 MILLIMETER WAVE RADAR, 12 STEERING WHEEL, 13 BLINKER LEVER, 14 NAVIGATION SYSTEM, 20 ANOTHER VEHICLE, 100 IMAGE-PICKUP APPARATUS, 110 CAMERA UNIT, 112 LENS, 114 IMAGE-PICKUP DEVICE, 116 AFE, 130 MAIN BODY UNIT, 131 SYSTEM CONTROLLER, 132 IMAGE INPUT IF, 133 WORKING MEMORY, 134 SYSTEM MEMORY, 135 IMAGE PROCESSOR, 136 DISPLAY OUTPUT UNIT, 138 INPUT/OUTPUT IF, 139 BUS LINE, 160 DISPLAY UNIT, 214 IMAGE-PICKUP ANGLE, 261 DISPLAY ANGLE OF VIEW, 301 WEIGHTING WINDOW, 302 NORMAL WINDOW, 303 REDUCTION WINDOW, 900 CENTER LANE, 901 RIGHT LANE, 902 LEFT LANE, 911~916 SEPARATRIX, 920 SKY, 921 SUN, 922 BOUNDARY, 923, 924 STREET TREE, 925 SHADE

## Claims

1. An image-pickup apparatus (100) comprising:
- an image-pickup unit (110) configured to capture an image of surroundings of a vehicle;
- a controller (131) configured to control the image-pickup unit (110);
- an image processor (135) configured to process the image captured by the image-pickup unit (110);
- an output unit (136) configured to output the image processed by the image processor (135) to a display unit;
- a detection unit (138) configured to detect a lane change direction of the vehicle; and
**characterized by**
a recognition processor (137) configured to recognize a lane marking on a road surface being in the lane change direction from the image captured by the image-pickup unit (110); and
wherein at least one of the image-pickup control carried out by the controller and the image processing carried out by the image processor (135) applies a weighting to the image captured by the image-pickup unit (110), which is divided in a plurality of areas, the weighting consisting of applying a weight to the average luminance value of each area of the captured image and in such a way that a larger weight is applied to the area being adjacent to the recognized lane marking and being in the lane change direction with respect to the weights applied to the other areas of the captured image; and wherein the at least one of the image-pickup control carried out by the controller and the image processing carried out by the image processor (135), further comprises one feature selected from the following features (a), (b) and (c):
a) the controller performs an AE operation with the weighting applied to the image captured by the image-pickup unit (110), and controls the image-pickup unit (110) based on the result of the AE operation;
b) the image processor (135) executes a brightness adjustment with the weighting applied to the image captured by the image-pickup unit (110); and
c) the image processor (135) executes a white balance adjustment with the weighting applied to the image captured by the image-pickup unit (110).

2. The image-pickup apparatus (100) according to Claim 1, wherein the controller or the image processor (135) associates a state of the lane change of the vehicle with the weighted area during a period from a timing when the detection unit (138) has detected the information indicating that the lane change will start to a timing when it detects information indicating that the lane change will be ended.

3. The image-pickup apparatus (100) according to Claim 1, wherein
- the recognition processor (137) detects a road surface from the image captured by the image-pickup unit (110), and
- at least one of the controller and the image processor (135) applies the weighting in such a way that a large weight is applied to an area including the road surface in the lane change direction.

4. The image-pickup apparatus (100) according to Claim 3, wherein
- the recognition processor (137) detects a moving body in the lane change direction from the image captured by the image-pickup unit (110), and
- at least one of the controller and the image processor (135) applies the weighting in such a way that a large weight is applied to an area including the moving body in the lane change direction.

5. The image-pickup apparatus (100) according to Claim 1, wherein, when the recognition processor (137) has detected a plurality of lane markings in the lane change direction, at least one of the controller and the image processor (135) applies the weighting in such a way that a large weight is applied to an area defined based on two lane markings adjacent to the vehicle.

6. The image-pickup apparatus (100) according to Claim 1, wherein the image-pickup unit (110) captures an image on a rear side with respect to a traveling direction of the vehicle.

7. The image-pickup apparatus (100) according to Claim 1, wherein the detection unit (138) detects the information regarding the lane change based on an operation signal of a direction indicator by a driver.

8. The image-pickup apparatus (100) according to Claim 1, wherein the detection unit (138) detects the information regarding the lane change based on a steering signal based on a steering wheel operation by a driver.

9. The image-pickup apparatus (100) according to Claim 1, wherein the detection unit (138) detects the information regarding the lane change based on a change in a position of a lane marking detected by the recognition processor (137) .

10. The image-pickup apparatus (100) according to Claim 1, wherein the detection unit (138) detects the information regarding the lane change based on planned path information acquired from a navigation system.

11. An image-pickup display method comprising:
- an image-pickup step for causing an image-pickup unit (110) to capture an image, the image-pickup unit (110) capturing an image of surroundings of a vehicle;
- a control step for controlling the image-pickup unit (110) ;
- an image processing step for processing the image captured in the image-pickup step;
- a display step for causing a display unit to display the image processed in the image processing step;
- a detection step for detecting information regarding a lane change direction of the vehicle; and
**characterized by**
a recognition step for recognizing a lane marking on a road surface being in the lane change direction from the image captured in the image-pickup step,
wherein at least one of the control step and the image processing step applies a weighting to the image captured in the image-pickup step, which is divided in a plurality of areas, the weighting consisting of applying a weight to the average luminance value of each area of the captured image and in such a way that a larger weight is applied to the area being adjacent to the recognized lane marking and being in the lane change direction with respect to the weights applied to the other areas of the captured image; and at least one of the control step and the image processing step further comprises one step selected from the following steps (a), (b) and (c) :
a) a) a step of performing an AE operation with the weighting applied to the image captured in the image-pickup step (110);
b) a step of executing a brightness adjustment with the weighting applied to the image captured in the image-pickup step; and
c) a step of executing a white balance adjustment with the weighting applied to the image captured in the image-pickup step.

12. An image-pickup display program comprising instructions for causing a computer of an image-pickup apparatus according to claim 1 to execute the following steps /
- an image-pickup step for causing an image-pickup unit (110) to capture an image, the image-pickup unit (110) capturing an image of surroundings of a vehicle;
- a control step for controlling the image-pickup unit (110) ;
- an image processing step for processing the image captured in the image-pickup step;
- a display step for causing a display unit to display the image processed in the image processing step;
- a detection step for detecting information regarding a lane change direction of the vehicle; and
**characterized by**
a recognition step for recognizing a lane marking on a road surface being in the lane change direction from the image captured in the image-pickup step,
wherein at least one of the control step and the image processing step applies a weighting to the image captured in the image-pickup step, which is divided in a plurality of areas, the weighting consisting of applying a weight to the average luminance value of each area of the captured image and in such a way that a larger weight is applied to the area being adjacent to the recognized lane marking and being in the lane change direction with respect to the weights applied to the other areas of the captured image; and at least one of the control step and the image processing step further comprises one step selected from the following steps (a), (b) and (c):
a) a step of performing an AE operation with the weighting applied to the image captured in the image-pickup step;
b) a step of executing a brightness adjustment with the weighting applied to the image captured in the image-pickup step; and
c) a step of executing a white balance adjustment with the weighting applied to the image captured in the image-pickup step.

## Patentansprüche

1. Bildaufnahmevorrichtung (100), die Folgendes umfasst:
- eine Bildaufnahmeeinheit (110), die konfiguriert ist, ein Bild von der Umgebung eines Fahrzeugs aufzunehmen;
- eine Steuereinrichtung (131), die konfiguriert ist, die Bildaufnahmeeinheit (110) zu steuern;
- eine Bildverarbeitungseinrichtung (135), die konfiguriert ist, das Bild, das von der Bildaufnahmeeinheit (110) aufgenommen worden ist, zu verarbeiten;
- eine Ausgabeeinheit (136), die konfiguriert ist, das Bild, das von der Bildverarbeitungseinrichtung (135) verarbeitet worden ist, an eine Anzeigeeinheit auszugeben;
- eine Detektionseinheit (138), die konfiguriert ist, eine Fahrbahnwechselrichtung des Fahrzeugs zu detektieren; und
**gekennzeichnet durch**
einen Erkennungsprozessor (137), der konfiguriert ist, eine Fahrbahnmarkierung auf einer Straßenoberfläche, die sich in der Fahrbahnwechselrichtung befindet, aus dem Bild, das von der Bildaufnahmeeinheit (110) aufgenommen worden ist, zu erkennen; und
wobei die Bildaufnahmesteuerung, die von der Steuereinrichtung ausgeführt wird, und/oder die Bildverarbeitung, die von der Bildverarbeitungseinrichtung (135) ausgeführt wird, eine Gewichtung auf das Bild, das von der Bildaufnahmeeinheit (110) aufgenommen worden ist, das in mehrere Bereiche unterteilt ist, anwenden, wobei die Gewichtung aus dem Anwenden einer Gewichtung auf den mittleren Luminanzwert jedes Bereichs des aufgenommenen Bildes besteht, und derart, dass eine größere Gewichtung auf den Bereich angewendet wird, der neben der erkannten Fahrbahnmarkierung liegt und in der Fahrbahnwechselrichtung liegt, bezüglich der Gewichtungen, die auf die anderen Bereiche des aufgenommenen Bildes angewendet werden; und
wobei die Bildaufnahmesteuerung, die von der Steuereinrichtung ausgeführt wird, und/oder die Bildverarbeitung, die von der Bildverarbeitungseinrichtung (135) ausgeführt wird, ferner ein Merkmal umfassen, das aus den folgenden Merkmalen (a), (b) und (c) ausgewählt wird:
a) die Steuereinrichtung führt einen AE-Vorgang mit der Gewichtung durch, die auf das Bild, das von der Bildaufnahmeeinheit (110) aufgenommen worden ist, angewendet worden ist, und steuert die Bildaufnahmeeinheit (110) basierend auf dem Ergebnis des AE-Vorgangs;
b) die Bildverarbeitungseinrichtung (135) führt eine Helligkeitsanpassung mit der Gewichtung aus, die auf das Bild, das von der Bildaufnahmeeinheit (110) aufgenommen worden ist, angewendet worden ist; und
c) die Bildverarbeitungseinrichtung (135) führt einen Weißabgleich mit der Gewichtung aus, die auf das Bild, das von der Bildaufnahmeeinheit (110) aufgenommen worden ist, angewendet worden ist.

2. Bildaufnahmevorrichtung (100) nach Anspruch 1, wobei die Steuereinrichtung oder die Bildverarbeitungseinrichtung (135) während einer Zeitdauer von einem Zeitpunkt, zu dem die Detektionseinheit (138) die Informationen detektiert hat, die anzeigen, dass der Fahrbahnwechsel begonnen wird, bis zu einem Zeitpunkt, zu dem sie Informationen detektiert, die anzeigen, dass der Fahrbahnwechsel beendet wird, dem gewichteten Bereich einen Zustand des Fahrbahnwechsels des Fahrzeugs zuordnet.

3. Bildaufnahmevorrichtung (100) nach Anspruch 1, wobei
- der Erkennungsprozessor (137) aus dem Bild, das von der Bildaufnahmeeinheit (110) aufgenommen worden ist, eine Straßenoberfläche detektiert, und
- die Steuereinrichtung und/oder die Bildverarbeitungseinrichtung (135) die Gewichtung derart anwenden, dass eine große Gewichtung auf einen Bereich angewendet wird, der die Straßenoberfläche in der Fahrbahnwechselrichtung enthält.

4. Bildaufnahmevorrichtung (100) nach Anspruch 3, wobei
- der Erkennungsprozessor (137) aus dem Bild, das von der Bildaufnahmeeinheit (110) aufgenommen worden ist, in der Fahrbahnwechselrichtung einen sich bewegenden Körper detektiert, und
- die Steuereinrichtung und/oder die Bildverarbeitungseinrichtung (135) die Gewichtung derart anwenden, dass eine große Gewichtung auf einen Bereich angewendet wird, der in der Fahrbahnwechselrichtung den sich bewegenden Körper enthält.

5. Bildaufnahmevorrichtung (100) nach Anspruch 1, wobei dann, wenn der Erkennungsprozessor (137) mehrere Fahrbahnmarkierungen in der Fahrbahnwechselrichtung detektiert hat, die Steuereinrichtung und/oder die Bildverarbeitungseinrichtung (135) die Gewichtung derart anwenden, dass eine große Gewichtung auf einen Bereich angewendet wird, der basierend auf zwei Fahrbahnmarkierungen neben dem Fahrzeug definiert ist.

6. Bildaufnahmevorrichtung (100) nach Anspruch 1, wobei die Bildaufnahmeeinheit (110) ein Bild auf einer Rückseite bezüglich einer Fahrtrichtung des Fahrzeugs aufnimmt.

7. Bildaufnahmevorrichtung (100) nach Anspruch 1, wobei die Detektionseinheit (138) die Informationen hinsichtlich des Fahrbahnwechsels basierend auf einem Betätigungssignal eines Richtungsanzeigers durch einen Fahrer detektiert.

8. Bildaufnahmevorrichtung (100) nach Anspruch 1, wobei die Detektionseinheit (138) die Informationen hinsichtlich des Fahrbahnwechsels basierend auf einem Lenksignal, das auf einer Lenkradbetätigung durch einen Fahrer basiert, detektiert.

9. Bildaufnahmevorrichtung (100) nach Anspruch 1, wobei die Detektionseinheit (138) die Informationen hinsichtlich des Fahrbahnwechsels basierend auf einer Änderung in einer Position einer Fahrbahnmarkierung, die von dem Erkennungsprozessor (137) detektiert worden ist, detektiert.

10. Bildaufnahmevorrichtung (100) nach Anspruch 1, wobei die Detektionseinheit (138) die Informationen hinsichtlich des Fahrbahnwechsels basierend auf geplanten Weginformationen, die von einem Navigationssystem erfasst worden sind, detektiert.

11. Bildaufnahmeanzeigeverfahren, das Folgendes umfasst:
- einen Bildaufnahmeschritt, um eine Bildaufnahmeeinheit (110) zu veranlassen, ein Bild aufzunehmen, wobei die Bildaufnahmeeinheit (110) ein Bild von der Umgebung eines Fahrzeugs aufnimmt;
- einen Steuerschritt zum Steuern der Bildaufnahmeeinheit (110);
- einen Bildverarbeitungsschritt zum Verarbeiten des Bildes, das in dem Bildaufnahmeschritt aufgenommen worden ist;
- einen Anzeigeschritt, um eine Anzeigeeinheit zu veranlassen, das Bild anzuzeigen, das in dem Bildverarbeitungsschritt verarbeitet worden ist; und
- einen Detektionsschritt zum Detektieren von Informationen hinsichtlich einer Fahrbahnwechselrichtung des Fahrzeugs;
**gekennzeichnet durch**
einen Erkennungsschritt zum Erkennen einer Fahrbahnmarkierung auf einer Straßenoberfläche, die sich in der Fahrbahnwechselrichtung befindet, aus dem Bild, das in dem Bildaufnahmeschritt aufgenommen worden ist,
wobei der Steuerschritt und/oder der Bildverarbeitungsschritt eine Gewichtung auf das Bild anwenden, das in dem Bildaufnahmeschritt aufgenommen worden ist, und das in mehrere Bereiche unterteilt ist, wobei das Gewichten aus dem Anwenden einer Gewichtung auf den mittleren Luminanzwert jedes Bereichs des aufgenommenen Bildes besteht, und derart, dass eine größere Gewichtung auf den Bereich angewendet wird, der neben der erkannten Fahrbahnmarkierung liegt, und in der Fahrbahnwechselrichtung liegt, bezüglich der Gewichtungen, die auf die anderen Bereiche des aufgenommenen Bildes angewendet werden; und
der Steuerschritt und/oder der Bildverarbeitungsschritt ferner einen Schritt umfassen, der aus den folgenden Schritten (a), (b) und (c) ausgewählt wird:
a) einen Schritt des Durchführens eines AE-Vorgangs mit der Gewichtung, die auf das Bild, das in dem Bildaufnahmeschritt aufgenommen worden ist, angewendet worden ist (110);
b) einen Schritt des Ausführens einer Helligkeitsanpassung mit der Gewichtung, die auf das Bild, das in dem Bildaufnahmeschritt aufgenommen worden ist, angewendet worden ist; und
c) einen Schritt des Ausführens eines Weißabgleichs mit der Gewichtung, die auf das Bild, das in dem Bildaufnahmeschritt aufgenommen worden ist, angewendet worden ist.

12. Bildaufnahmeanzeigeprogramm, das Anweisungen umfasst, um einen Computer einer Bildaufnahmevorrichtung nach Anspruch 1 zu veranlassen, die folgenden Schritte auszuführen:
- einen Bildaufnahmeschritt, um eine Bildaufnahmeeinheit (110) zu veranlassen, ein Bild aufzunehmen, wobei die Bildaufnahmeeinheit (110) ein Bild von der Umgebung eines Fahrzeugs aufnimmt;
- einen Steuerschritt zum Steuern der Bildaufnahmeeinheit (110);
- einen Bildverarbeitungsschritt zum Verarbeiten des Bildes, das in dem Bildaufnahmeschritt aufgenommen worden ist;
- einen Anzeigeschritt, um eine Anzeigeeinheit zu veranlassen, das Bild anzuzeigen, das in dem Bildverarbeitungsschritt verarbeitet worden ist;
- einen Detektionsschritt zum Detektieren von Informationen hinsichtlich einer Fahrbahnwechselrichtung des Fahrzeugs; und
**gekennzeichnet durch**
einen Erkennungsschritt zum Erkennen einer Fahrbahnmarkierung auf einer Straßenoberfläche, die sich in der Fahrbahnwechselrichtung befindet, aus dem Bild, das in dem Bildaufnahmeschritt aufgenommen worden ist,
wobei der Steuerschritt und/oder der Bildverarbeitungsschritt eine Gewichtung auf das Bild anwenden, das in dem Bildaufnahmeschritt aufgenommen worden ist, und das in mehrere Bereiche unterteilt ist, wobei die Gewichtung aus dem Anwenden einer Gewichtung auf den mittleren Luminanzwert jedes Bereichs des aufgenommenen Bildes besteht, und derart, dass eine größere Gewichtung auf den Bereich angewendet wird, der neben der erkannten Fahrbahnmarkierung liegt, und in der Fahrbahnwechselrichtung liegt, bezüglich der Gewichtungen, die auf die anderen Bereiche des aufgenommenen Bildes angewendet werden; und
der Steuerschritt und/oder der Bildverarbeitungsschritt ferner einen Schritt umfassen, der aus den folgenden Schritten (a), (b) und (c) ausgewählt wird:
a) einen Schritt des Durchführens eines AE-Vorgangs mit der Gewichtung, die auf das Bild, das in dem Bildaufnahmeschritt aufgenommen worden ist, angewendet worden ist;
b) einen Schritt des Ausführens einer Helligkeitsanpassung mit der Gewichtung, die auf das Bild, das in dem Bildaufnahmeschritt aufgenommen worden ist, angewendet worden ist; und
c) einen Schritt des Ausführens eines Weißabgleichs mit der Gewichtung, die auf das Bild, das in dem Bildaufnahmeschritt aufgenommen worden ist, angewendet worden ist.

## Revendications

1. Appareil de capture d'image (100) comprenant :
- une unité de capture d'image (110) configurée pour capturer une image d'une périphérie d'un véhicule ;
- une unité de commande (131) configurée pour commander l'unité de capture d'image (110) ;
- un processeur d'image (135) configuré pour traiter l'image capturée par l'unité de capture d'image (110) ;
- une unité de sortie (136) configurée pour délivrer l'image traitée par le processeur d'image (135) à une unité d'affichage ;
- une unité de détection (138) configurée pour détecter une direction de changement de voie du véhicule ; et
**caractérisé par**
un processeur de reconnaissance (137) configuré pour reconnaître un marquage de voie sur une surface routière se trouvant dans la direction de changement de voie à partir de l'image capturée par l'unité de capture d'image (110) ; et
dans lequel au moins la commande de capture d'image exécutée par l'unité de commande et/ou le traitement d'image exécuté par le processeur d'image (135) applique un poids à l'image capturée par l'unité de capture d'image (110), laquelle image étant divisée en une pluralité de zones, la pondération consistant à appliquer un poids à la valeur de luminance moyenne de chaque zone de l'image capturée et de telle sorte qu'un poids supérieur soit appliqué à la zone adjacente au marquage de voie reconnu et se trouvant dans la direction de changement de voie relativement au poids appliqué aux autres zones de l'image capturée ; et dans lequel la commande de capture d'image exécutée par l'unité de commande et/ou le traitement d'image exécuté par le processeur d'image (135) comprennent en outre une caractéristique sélectionnée parmi les caractéristiques suivantes (a), (b) et (c) :
a) l'unité de commande réalise une opération AE avec la pondération appliquée à l'image capturée par l'unité de capture d'image (110), et commande l'unité de capture d'image (110) en fonction du résultat de l'opération AE ;
b) le processeur d'image (135) exécute un réglage de brillance avec la pondération appliquée à l'image capturée par l'unité de capture d'image (110) et
c) le processeur d'image (135) exécute un réglage d'équilibrage des blancs avec la pondération appliquée à l'image capturée par l'unité de capture d'image (110).

2. Appareil de capture d'image (100) selon la revendication 1, dans lequel l'unité de commande ou le processeur d'image (135) associe un état de changement de voie du véhicule à la zone pondérée durant une période s'écoulant à compter d'un instant auquel l'unité de détection (138) a détecté les informations indiquant que le changement de voie va commencer jusqu'à un instant auquel elle détecte des informations indiquant que le changement de voie va s'achever.

3. Appareil de capture d'image (100) selon la revendication 1, dans lequel
- le processeur de reconnaissance (137) détecte une surface routière à partir de l'image capturée par l'unité de capture d'image (110) et
- l'unité de commande et/ou le processeur d'image (135) appliquent la pondération de telle sorte qu'un poids supérieur soit appliqué à une zone comportant la surface routière dans la direction de changement de voie.

4. Appareil de capture d'image (100) selon la revendication 3, dans lequel
- le processeur de reconnaissance (137) détecte un corps en mouvement dans la direction de changement de voie à partir de l'image capturée par l'unité de capture d'image (110), et
- l'unité de commande et/ou le processeur d'image (135) appliquent la pondération de telle sorte qu'un poids important soit appliqué à une zone comportant le corps en mouvement dans la direction de changement de voie.

5. Appareil de capture d'image (100) selon la revendication 1, dans lequel, quand le processeur de reconnaissance (137) a détecté une pluralité de marquages de voie dans la direction de changement de voie, l'unité de commande et/ou le processeur d'image (135) appliquent la pondération de telle sorte qu'un poids important soit appliqué à une zone définie en fonction de deux marquages de voie adjacents au véhicule.

6. Appareil de capture d'image (100) selon la revendication 1, dans lequel l'unité de capture d'image (110) capture une image sur un côté arrière relativement à une direction de déplacement du véhicule.

7. Appareil de capture d'image (100) selon la revendication 1, dans lequel l'unité de détection (138) détecte les informations concernant le changement de voie en fonction d'un signal de fonctionnement d'un clignotant par un conducteur.

8. Appareil de capture d'image (100) selon la revendication 1, dans lequel l'unité de détection (138) détecte les informations concernant le changement de voie en fonction d'un signal de direction basé sur une manœuvre de volant par un conducteur.

9. Appareil de capture d'image (100) selon la revendication 1, dans lequel l'unité de détection (138) détecte les informations concernant le changement de voie en fonction d'un changement de position d'un marquage de voie détecté par le processeur de reconnaissance (137).

10. Appareil de capture d'image (100) selon la revendication 1, dans lequel l'unité de détection (138) détecte les informations concernant le changement de voie en fonction d'informations de chemin planifié acquises à partir d'un système de navigation.

11. Procédé d'affichage de capture d'image comprenant :
- une étape de capture d'image pour amener une unité de capture d'image (110) à capturer une image, l'unité de capture d'images (110) capturant une image de la périphérie d'un véhicule ;
- une étape de commande pour commander l'unité de capture d'image (110) ;
- une étape de traitement d'image pour traiter l'image capturée à l'étape de capture d'image ;
- une étape d'affichage pour amener une unité d'affichage à afficher l'image traitée à l'étape de traitement d'image ;
- une étape de détection pour détecter des informations concernant une direction de changement de voie du véhicule ; et
**caractérisé par**
une étape de reconnaissance pour reconnaître un marquage de voie sur une surface routière se trouvant dans la direction de changement de voie à partir de l'image capturée à l'étape de capture d'image,
dans lequel l'étape de commande et/ou l'étape de traitement d'image applique une pondération à l'image capturée à l'étape de capture d'image, laquelle image étant divisée en une pluralité de zones, la pondération consistant à appliquer un poids à la valeur de luminance moyenne de chaque zone de l'image capturée et de telle sorte qu'un poids supérieur soit appliqué à la zone adjacente au marquage de voie reconnu et se trouvant dans la direction de changement de voie par rapport aux poids appliqués aux autres zones de l'image capturée ; et l'étape de commande et/ou l'étape de traitement d'images comprennent en outre une étape sélectionnée parmi les étapes suivantes (a) (b) et (c) :
a) une étape de réalisation d'une opération AE avec la pondération appliquée à l'image capturée à l'étape de capture d'image (110) ;
b) une étape d'exécution d'un réglage de brillance avec la pondération appliquée à l'image capturée à l'étape de capture d'image ; et
c) une étape d'exécution d'un réglage d'équilibre des blancs avec la pondération appliquée à l'image capturée dans l'étape de capture d'image.

12. Programme d'affichage de capture d'image comprenant des instructions pour amener un ordinateur d'un appareil de capture d'image selon la revendication 1 à exécuter les étapes suivantes :
- une étape de capture d'image pour amener une unité de capture d'image (110) à capturer une image, l'unité de capture d'image (110) capturant une image de la périphérie d'un véhicule ;
- une étape de commande pour commander l'unité de capture d'image (110) ;
- une étape de traitement d'image pour traiter l'image capturée à l'étape de capture d'image ;
- une étape d'affichage pour amener une unité d'affichage à afficher l'image traitée à l'étape de traitement d'image ;
- une étape de détection pour détecter des informations concernant une direction de changement de voie du véhicule ; et
**caractérisé par**
une étape de reconnaissance pour reconnaître un marquage de voie sur une surface routière se trouvant dans la direction de changement de voie à partir de l'image capturée à l'étape de capture d'image,
dans lequel l'étape de commande et/ou l'étape de traitement d'image appliquent une pondération à l'image capturée à l'étape de capture d'image, laquelle image étant divisée en une pluralité de zones, la pondération consistant à appliquer un poids à la valeur de luminance moyenne de chaque zone de l'image capturée et de telle sorte qu'un poids supérieur soit appliqué à la zone adjacente au marquage de voie reconnu et se trouvant dans la direction de changement de voie par rapport aux poids appliqués aux autres zones de l'image capturée ; et l'étape de commande et/ou l'étape de traitement d'images comprennent en outre une étape sélectionnée par les étapes suivantes (a), (b) et (c) :
a) une étape de réalisation d'une opération AE avec la pondération appliquée à l'image capturée à l'étape de capture d'image ;
b) une étape d'exécution d'un réglage de brillance avec la pondération appliquée à l'image capturée à l'étape de capture d'image ; et
c) une étape d'exécution d'un réglage d'équilibre des blancs avec la pondération appliquée à l'image capturée dans l'étape de capture d'image.
